# EUROPÄISCHE PATENTSCHRIFT

(11) **EP 3 916 209 B1**
(45) Veröffentlichungstag und Bekanntmachung des Hinweises auf die Patenterteilung: **13.03.2024**
(21) Anmeldenummer: 21166581.5
(22) Anmeldetag: 01.04.2021
(51) Int. Cl.: F01P 7/16, B60K 11/02, F01P 7/14, F01P 5/10, B60K 1/00

(54) **HYBRIDFAHRZEUG MIT EINEM KÜHLSYSTEM**
HYBRID VEHICLE WITH A COOLING SYSTEM
VÉHICULE HYBRIDE DOTÉ D'UN SYSTÈME DE REFROIDISSEMENT

(30) Priorität: 28.05.2020 DE 102020206674
(43) Veröffentlichungstag der Anmeldung: 01.12.2021
(73) Patentinhaber: VOLKSWAGEN AG, 38440 Wolfsburg (DE)
(72) Erfinder: Ziese, Martin, 38114 Braunschweig (DE); Lucke, Stefan, 38446 Wolfsburg (DE)

(56) Entgegenhaltungen:
- EP-A1- 0 949 095
- WO-A1-02/079621
- DE-A1-102018 212 693
- US-A1- 2017 074 130

## Beschreibung

Die Erfindung betrifft ein Hybridfahrzeug (HEV), d.h. ein Kraftfahrzeug, das neben einem Verbrennungsmotor auch einen elektrischen Traktionsmotor umfasst. Das Hybridfahrzeug kann insbesondere als Plug-in Hybridfahrzeug (PHEV) ausgebildet sein, so dass eine Traktionsbatterie, die zur Versorgung des Traktionsmotors mit elektrischer Leistung vorgesehen ist, nicht nur im Fahrbetrieb des Kraftfahrzeugs durch insbesondere einen Generatorbetrieb des Traktionsmotors sondern zusätzlich auch durch ein Anschließen an eine externe elektrische Energieversorgung, beispielsweise an eine Haushaltssteckdose oder an eine Ladestation, geladen werden kann.

Ein Kraftfahrzeug, unabhängig davon, ob dieses als konventionelles Kraftfahrzeug oder als Hybridfahrzeug ausgebildet ist, weist in der Regel ein Kühlsystem auf, das auf der Zirkulation einer Kühlflüssigkeit in mindestens einem Kühlkreis beruht. Bei der Durchströmung einer oder mehrerer in das Kühlsystem integrierter und zu kühlender Komponenten des Kraftfahrzeugs nimmt das Kühlmittel Wärmeenergie auf, die in mindestens einem Umgebungswärmetauscher zumindest teilweise wieder an die Umgebungsluft abgegeben wird. Dadurch kann eine Kühlung der zu kühlenden Komponenten realisiert werden, die, im Vergleich zu einer direkten Luftkühlung, besonders einfach und gut an unterschiedliche Kühlleistungsanforderungen der zu kühlenden Komponenten angepasst ist.

Bei einem Hybridfahrzeug müssen nicht nur die von einem konventionell, d.h. mittels lediglich eines Verbrennungsmotors angetriebenen Kraftfahrzeugs bekannten Komponenten, d.h. insbesondere der Verbrennungsmotor, mittels eines solchen Kühlsystems gekühlt werden, sondern in der Regel auch die elektrischen Antriebskomponenten, d.h. insbesondere der elektrische Traktionsmotor, eine diesem zugeordnete Leistungselektronik sowie die Traktionsbatterie. Gegebenenfalls kann, bei einer Ausgestaltung des Hybridfahrzeugs als PHEV, zusätzlich auch eine Kühlung des Ladegeräts, mittels dessen ein Laden der Traktionsbatterie durch ein Anschließen an eine externe Energieversorgung erfolgen kann, mittels eines solchen Kühlsystems vorgesehen sein. Ein solches Kühlsystem wird mittlerweile nicht nur zur Kühlung sondern auch zumindest zeitweise für ein Erwärmen von Komponenten des Kraftfahrzeugs, d.h. für eine funktionale Übertragung von Wärmeenergie auf diese Komponenten, genutzt, so dass ein solches auch als Temperiersystem bezeichnet werden kann. Eine zumindest zeitweise funktionale Übertragung von Wärmeenergie kann insbesondere für einen Heizungswärmetauscher, den Verbrennungsmotor und die Traktionsbatterie vorgesehen sein. Für den Verbrennungsmotor kann dadurch insbesondere ein möglichst schnelles Erwärmen bis zu einem hinsichtlich des Wirkungsgrads und der Schadstoffemissionen vorteilhaften Betriebstemperaturbereich angestrebt werden. Für die Traktionsbatterie ist die möglichst dauerhafte Temperierung innerhalb eines definierten Temperaturbereichs dagegen vorteilhaft für die Leistungsfähigkeit und die Lebensdauer.

Die DE 10 2007 005 391 A1 beschreibt ein Hybridfahrzeug mit einem Kühlsystem, das einen ersten Kühlmittelkreislauf und einen zweiten Kühlmittelkreislauf umfasst, in die jeweils ein Kühlmittelkühler integriert ist. Der erste Kühlmittelkreislauf integriert weiterhin einen Verbrennungsmotor des Hybridfahrzeugs und der zweite Kühlmittelkreislauf eine Aggregateanordnung, die einen elektrischen Traktionsmotor, ein Getriebe und eine Leistungselektronik des Hybridfahrzeugs umfassen kann. Über eine Verbindung kann bedarfsweise ein Austausch von Kühlmittel zwischen den zwei Kühlmittelkreisläufen realisiert werden.

Die DE 10 2018 212 693 A1 offenbart ein Hybridfahrzeug mit einer Brennkraftmaschine und einem Elektroantrieb. Die Brennkraftmaschine umfasst eine Ladeeinrichtung zur Verdichtung von Frischluft, die der Brennkraftmaschine zugeführt wird, beispielsweise einen Abgasturbolader, und einen Ladeluftkühler zur Kühlung der verdichteten Frischluft. Der Elektroantrieb umfasst einen Elektromotor, einen elektrischen Energiespeicher und eine Leistungselektronik. Das Hybridfahrzeug weist weiterhin ein Kühlsystem mit mindestens einem Hochtemperatur-Kühlmittelkreislauf, einem Mitteltemperatur-Kühlmittelkreislauf, einem Niedertemperatur-Kühlmittelkreislauf und einem Kältemittelkreislauf auf. Der Kältemittelkreislauf umfasst einen Kompressor, einen Kondensator, einen Verdampfer und mindestens einen Chiller, über welchen zumindest einer der Kühlmittelkreisläufe gekühlt werden kann. Weiterhin ist mindestens eine steuerbare Fluidverbindung zwischen dem Hochtemperatur-Kühlmittelkreislauf und einem der anderen Kühlmittelkreisläufe vorgesehen.

Der Erfindung lag die Aufgabe zugrunde, ein vorteilhaftes Kühlsystem für ein Hybridfahrzeug zu entwickeln. Insbesondere sollte das Kühlsystem bei einem möglichst einfachen Aufbau eine bedarfsgerechte Kühlung der in das Kühlsystem integrierten Komponenten ermöglichen.

Diese Aufgabe wird mittels eines Kraftfahrzeugs gemäß dem Patentanspruch 1 gelöst. Vorteilhafte Ausgestaltungsformen des erfindungsgemäßen Kraftfahrzeugs sind Gegenstände der weiteren Patentansprüche und/oder ergeben sich aus der nachfolgenden Beschreibung der Erfindung.

Bei einem erfindungsgemäßen Kraftfahrzeug handelt es sich um ein Hybridfahrzeug (HEV) und insbesondere um ein Plug-in Hybridfahrzeug (PHEV), d.h. um ein Kraftfahrzeug, das sowohl eine Brennkraftmaschine als auch einen elektrischen Traktionsmotor, die jeweils zumindest zeitweise zur Bereitstellung der oder eines Teils der Fahrantriebsleistung für das Kraftfahrzeug vorgesehen sind, umfasst. Zur bedarfsweisen Versorgung des elektrischen Traktionsmotors mit elektrischer Leistung umfasst das erfindungsgemäße Kraftfahrzeug weiterhin eine Traktionsbatterie. Bei einer Ausgestaltung des Kraftfahrzeugs als Plug-in Hybridfahrzeug umfasst dieses zudem ein Ladegerät, das an eine externe Energieversorgung anschließbar ist.

Ein erfindungsgemäßes Kraftfahrzeug umfasst zudem ein Kühlsystem, das eine Hauptkühlkreisanordnung aufweist, die eine Zirkulation eines Kühlmittels, insbesondere einer Kühlflüssigkeit, ermöglicht. In die Hauptkühlkreisanordnung ist zumindest der Verbrennungsmotor (beziehungsweise zumindest ein in den Verbrennungsmotor integrierter Kühlmittelkanal), ein Kühlmittelkühler, ein Heizungswärmetauscher, eine vorzugsweise elektrische (erste) Heizvorrichtung, ein Ölkühler und ein (aktiv ansteuerbares) Verteilsystem integriert. Der Verbrennungsmotor kann insbesondere ein Zylindergehäuse und einen Zylinderkopf umfassen, wobei zumindest jeweils ein Kühlmittelkanal in sowohl dem Zylindergehäuse als auch dem Zylinderkopf ausgebildet sein kann. Die Kühlmittelkanäle des Zylindergehäuses und des Zylinderkopfs können dabei seriell oder, zumindest abschnittsweise, parallel verschaltet sein.

Als "Kühlmittelkühler" wird ein Wärmetauscher des Kühlsystems verstanden, der ausschließlich oder primär einer Übertragung von Wärmeenergie von dem Kühlmittel auf (Umgebungs-)Luft, die diesen Wärmetauscher ebenfalls um- und/oder durchströmt, dient.

Als "Heizungswärmetauscher" wird ein Wärmetauscher des Kühlsystems verstanden, der ausschließlich oder primär einer Übertragung von Wärmeenergie von dem Kühlmittel auf (Umgebungs-)Luft, die einem Innenraum des Kraftfahrzeugs zu dessen Temperierung zugeführt wird, dient.

Als "Ölkühler" wird ein Wärmetauscher verstanden, in dem ein Wärmeübergang zwischen dem Kühlmittel und einem den Ölkühler (separiert von dem Kühlmittel) ebenfalls durchströmenden Öl oder einem vergleichbaren flüssigen Schmiermittel realisiert wird.

Die Bezeichnung des Kühlsystems und der dazugehörigen Komponenten mit dem Begriff "kühl" beruht auf der primären Funktion des Kühlsystems zur Kühlung von Komponenten des Kraftfahrzeugs. Dies schließt nicht aus, dass mittels des Kühlsystems auch eine Aufwärmfunktionalität und folglich grundsätzlich ein Temperieren von Komponenten des Kraftfahrzeugs umgesetzt wird.

In einer ersten Betriebsstellung des Verteilsystems ist ein Kühlmittel mittels mindestens einer Kühlmittelpumpe (vorzugsweise ausschließlich) in einem den Heizungswärmetauscher und die (erste) Heizvorrichtung umfassenden ersten Kühlkreis förderbar. Diese erste Betriebsstellung kann insbesondere in einem Nichtbetrieb des Kraftfahrzeugs oder in einem E-Betrieb des Kraftfahrzeugs, in dem sich dieses bei nicht betriebener Brennkraftmaschine in einem Fahrbetrieb befindet, so dass eine während des Fahrbetriebs erforderliche Fahrantriebsleistung ausschließlich von dem (mindestens einen) elektrischen Traktionsmotor bereitgestellt wird, eingestellt sein. Ein Heizleistungsbedarf des Heizungswärmetauschers kann dann in vorteilhafter Weise mittels der (ersten) Heizvorrichtung bereitgestellt werden. Durch eine Integration lediglich der genannten Funktionskomponenten in den ersten Kühlkreis kann dabei die thermische Masse dieses Kühlkreises möglichst gering gehalten werden, so dass ein möglichst großer Teil der von der (ersten) Heizvorrichtung zur Verfügung gestellten Heizleistung in dem Heizungswärmetauscher zur Temperierung des Innenraums des Kraftfahrzeugs genutzt werden kann.

In einer zweiten Betriebsstellung des Verteilsystems ist das Kühlmittel (vorzugsweise ausschließlich) in einem zumindest den Kühlmittelkühler und den Ölkühler, gegebenenfalls auch den Verbrennungsmotor umfassenden zweiten Kühlkreis förderbar ist. Diese zweite Betriebsstellung kann insbesondere in einem E-Betrieb des Kraftfahrzeugs eingestellt sein, wenn bereits ein Kühlleistungsbedarf für mindestens eine mittels der Hauptkühlkreisanordnung direkt oder indirekt zu kühlende Funktionskomponente gegeben ist. Dabei kann insbesondere auch ein Kühlleistungsbedarf für den elektrischen Traktionsmotor gegeben sein, wobei dieser über eine Ölleitung mit dem Ölkühler verbunden sein kann. Der elektrische Traktionsmotor kann demnach in vorteilhafter Weise mittels Öl gekühlt ausgebildet sein, was eine konstruktiv vorteilhafte Ausgestaltung des Kraftfahrzeugs ermöglicht, da eine Integration des elektrischen Traktionsmotors in das Kühlsystem derart, dass dieses von dem Kühlmittel durchströmt wird, entfallen kann. Mittels des Kühlsystems erfolgt dann lediglich eine Rückkühlung des in der Ölleitung geführten Öls, wobei dieses weiterhin bevorzugt auch zur Schmierung und/oder Kühlung von weiteren Funktionskomponenten des Kraftfahrzeugs, insbesondere eines dem Verbrennungsmotor zugeordneten Schaltgetriebe genutzt werden kann. Durch das Führen des Kühlmittels durch den Verbrennungsmotor in der zweiten Betriebsstellung des Verteilsystems, was insbesondere stromauf des Kühlmittelkühlers vorgesehen sein kann, kann ein Wärmeübergang von dem Kühlmittel auf den Verbrennungsmotor realisiert werden, wodurch dieser für eine möglicherweise kurzfristig anstehende Inbetriebnahme vortemperiert werden kann. Dies kann sich vorteilhaft hinsichtlich des Wirkungsgrads und des Schadstoffemissionsverhalten des Verbrennungsmotors nach einer solchen Inbetriebnahme auswirken.

Weiterhin bevorzugt kann vorgesehen sein, dass in der zweiten Betriebsstellung des Verteilsystems das Kühlmittel zusätzlich auch (zumindest bedarfsweise) den dann in den zweiten Kühlkreis integrierten Heizungswärmetauscher durchströmen kann, was ermöglicht, in dem Kühlmittel gespeicherte Wärmeenergie zur Temperierung des Innenraums des Kraftfahrzeugs zu nutzen.

In einer dritten Betriebsstellung des Verteilsystems ist das Kühlmittel (vorzugsweise ausschließlich) in dem ersten Kühlkreis sowie in einem den Verbrennungsmotor umfassenden und den Kühlmittelkühler ausschließenden, dritten Kühlkreis förderbar, wobei der dritte Kühlkreis von dem ersten Kühlkreis separiert ist. Diese dritte Betriebsstellung kann insbesondere in einem V-Betrieb des Kraftfahrzeugs vorgesehen sein, in dem sich dieses in einem Fahrbetrieb befindet, wobei eine während des Fahrbetriebs erforderliche Fahrantriebsleistung zumindest teilweise von dem Verbrennungsmotor bereitgestellt wird. Besonders bevorzugt kann die dritte Betriebsstellung nach einem Kaltstart des Verbrennungsmotors vorgesehen sein, d.h. wenn dieser bei der Inbetriebnahme eine noch unterhalb eines definierten Soll-Betriebstemperaturbereichs liegende Betriebstemperatur aufweist, In der dritten Betriebsstellung kann einerseits der Innenraum des Kraftfahrzeugs mittels der (ersten) Heizvorrichtung und dem Heizungswärmetauscher gemäß der ersten Betriebsstellung temperiert werden, während parallel Kühlmittel in einem den Verbrennungsmotor umfassenden und den Kühlmittelkühler ausschließenden (dritten) Kühlkreis förderbar ist, wodurch der Verbrennungsmotor möglichst schnell bis zum Erreichen des Soll-Betriebstemperaturbereichs erwärmt werden kann.

In einer vierten Betriebsstellung des Verteilsystems ist das Kühlmittel (vorzugsweise ausschließlich) in einem den Verbrennungsmotor und den Heizungswärmetauscher umfassenden vierten Kühlkreis förderbar. Auch diese vierte Betriebsstellung kann insbesondere in einem V-Betrieb des Kraftfahrzeugs vorgesehen sein, wobei dann Abwärme des Verbrennungsmotors für ein Temperieren des Innenraums des Kraftfahrzeugs durch einen entsprechenden Wärmeübergang in dem Heizungswärmetauscher vorgesehen sein kann. Die vierte Betriebsstellung kann demnach insbesondere dann vorteilhaft eingestellt sein, wenn der Verbrennungsmotor eine innerhalb des Soll-Betriebstemperaturbereichs liegende Betriebstemperatur aufweist.

In einer weiteren (ggf. fünften oder sechsten) Betriebsstellung des Verteilsystems ist das Kühlmittel (vorzugsweise ausschließlich) in dem vierten Kühlkreis sowie in einem den Verbrennungsmotor und den Kühlmittelkühler umfassenden, weiteren (ggf. fünften oder sechsten) Kühlkreis förderbar, wobei der weitere Kühlkreis abschnittsweise integral mit dem vierten Kühlkreis ausgebildet sein kann (d.h. in einem Abschnitt vermischt sich das durch die verschiedenen Kühlkreise strömende Kühlmittel). Eine Auswahl der vierten oder fünften Betriebsstellung kann insbesondere in Abhängigkeit davon erfolgen, ob die in das Kühlmittel übertragene Abwärme, insbesondere des Verbrennungsmotors, über dem Heizleistungsbedarf des Heizungswärmetauschers liegt und daher teilweise über den Kühlmittelkühler abgeführt werden sollte.

Das Kühlsystem eines erfindungsgemäßen Kraftfahrzeugs umfasst weiterhin eine von der Hauptkühlkreisanordnung separierte Zusatzkühlkreisanordnung, in die ein Ladegerät für die Traktionsbatterie und/oder eine Leistungselektronik sowie weiterhin die Traktionsbatterie, ein Kühlmittelkühler, ein Chiller und ein Verteilsystem integriert sind. Das Ladegerät kann insbesondere mit einem Steckverbinder zum Anschließen des Ladegeräts an eine externe Energieversorgung, beispielsweise eine Haushaltssteckdose oder eine Ladestation, versehen sein.

Als "Chiller" wird ein Kühlmittel-Kältemittel-Wärmetauscher einer Kältemaschine, die insbesondere auf einem thermodynamischen Kreisprozesse beruhen kann, verstanden. Die Kältemaschine kann dabei insbesondere auch als Klimagerät vorgesehen sein, mittels dessen bedarfsweise eine Kühlung von einem Innenraum des Kraftfahrzeugs zuzuführender Luft erfolgen kann.

In einer ersten Betriebsstellung des Verteilsystems der Zusatzkühlkreisanordnung kann Kühlmittel (vorzugsweise ausschließlich) in einem das Ladegerät und/oder die Leistungselektronik sowie den Kühlmittelkühler umfassenden ersten Kühlkreis der Zusatzkühlkreisanordnung und in einem die Traktionsbatterie und den Chiller umfassenden, zweiten Kühlkreis der Zusatzkühlkreisanordnung, der vorzugsweise von dem ersten Kühlkreis separiert ist, förderbar sein. Dies ermöglicht, die besonders temperatursensitive Traktionsbatterie bedarfsgerecht mittels des Chillers beziehungsweise mittels der den Chiller umfassenden Kältemaschine zu temperieren, insbesondere zu kühlen, während das Ladegerät und/oder die Leistungselektronik, die weniger temperatursensitiv sind, mittels des Kühlmittelkühlers der Zusatzkühlkreisanordnung bedarfsweise gekühlt werden können, was, anders als der Einsatz der Kältemaschine, ohne oder mit einem lediglich sehr geringen Energieaufwand verbunden sein kann.

In einer zweiten Betriebsstellung des Verteilsystems der Zusatzkühlkreisanordnung kann das Kühlmittel (vorzugsweise ausschließlich) in einem das Ladegerät und/oder die Leistungselektronik sowie zusätzlich die Traktionsbatterie, den Kühlmittelkühler und vorzugsweise auch den Chiller umfassenden, dritten Kühlkreis der Zusatzkühlkreisanordnung förderbar sein. Dies ermöglicht, die Traktionsbatterie sowie das Ladegerät und/oder die Leistungselektronik ausschließlich mittels des Kühlmittelkühlers zu kühlen, was einen mit einem Betrieb der Kältemaschine verbundenen Energieverbrauch vermeidet. Alternativ kann eine besonders hohe Kühlleistung realisiert oder der Energieverbrauch der Kältemaschine reduziert werden, wenn die Kühlleistung des Kühlmittelkühlers und des Chillers beziehungsweise der Kältemaschine in Kombination genutzt werden.

Gemäß einer bevorzugten Ausgestaltungsform eines erfindungsgemäßen Kraftfahrzeugs kann vorgesehen sein, dass in die Hauptkühlkreisanordnung zusätzlich eine zweite, vorzugsweise elektrische Heizvorrichtung integriert ist, wobei in einer zusätzlichen (ggf. sechsten oder fünften) Betriebsstellung des Verteilsystems das Kühlmittel (vorzugsweise ausschließlich) in einem den Heizungswärmetauscher sowie die zweite Heizvorrichtung umfassenden zusätzlichen (ggf. sechsten oder fünften) Kühlkreis förderbar ist. Diese zusätzliche Betriebsstellung kann insbesondere in einem Nichtbetrieb des Kraftfahrzeugs eingestellt sein. Ein Heizleistungsbedarf des Heizungswärmetauschers kann dann in vorteilhafter Weise mittels der zweiten Heizvorrichtung bereitgestellt werden. Durch eine Integration lediglich der genannten Funktionskomponenten in den zusätzlichen Kühlkreis kann dabei auch die thermische Masse dieses Kühlkreises möglichst gering gehalten werden, so dass ein möglichst großer Teil der von der zweiten Heizvorrichtung zur Verfügung gestellten Heizleistung in dem Heizungswärmetauscher zur Temperierung des Innenraums des Kraftfahrzeugs genutzt werden kann. Die zweite Heizvorrichtung kann sich von der ersten Heizvorrichtung gegebenenfalls hinsichtlich der maximalen Heizleistung und/oder dahingehend unterscheiden, dass die erste Heizvorrichtung ausschließlich mit elektrischer Energie aus der Traktionsbatterie versorgbar ist, während die zweite Heizvorrichtung ausschließlich oder zusätzlich zu einer solchen Energieversorgung aus der Traktionsbatterie von einer externen Energiequelle, beispielsweise einer Haushaltssteckdose, mit elektrischer Energie versorgbar ist.

Gemäß einer weiterhin bevorzugten Ausgestaltungsform eines erfindungsgemäßen Kraftfahrzeugs kann das Verteilsystem der Hauptkühlkreisanordnung eine vorzugsweise elektromechanisch betätigbare Verteilvorrichtung umfassen, die
- einen ersten Einlass für das Kühlmittel aufweist, der, möglicherweise unter Zwischenschaltung mindestens eines Verteilers, mindestens einer Kühlmittelpumpe und/oder mindestens eines Steuerventils, mit jeweils einem Auslass (für das Kühlmittel) des Heizungswärmetauschers und des Ölkühlers verbunden ist, und
- einen ersten Auslass für das Kühlmittel aufweist, der mit einem Einlass (für das Kühlmittel) des Verbrennungsmotors verbunden ist, und
- einen zweiten Einlass (für das Kühlmittel) aufweist, der mit einem Auslass (für das Kühlmittel) des Verbrennungsmotors verbunden ist, und
- einen zweiten Auslass (für das Kühlmittel) aufweist, der mit einem Einlass (für das Kühlmittel) des Kühlmittelkühlers verbunden ist, und
- einen dritten Einlass (für das Kühlmittel) aufweist, der mit einem Auslass (für das Kühlmittel) des Kühlmittelkühlers verbunden ist; und
- einen dritten Auslass (für das Kühlmittel) aufweist, der mit jeweils einem Einlass (für das Kühlmittel) der ersten Heizvorrichtung und des Ölkühlers verbunden oder verbindbar ist.

Besonders bevorzugt kann dann noch vorgesehen sein, dass eine bedarfsweise fluidleitende Verbindung zwischen zumindest einigen der Einlässe und der Auslässe der Verteilvorrichtung mittels mindestens eines Drehschiebers und vorzugsweise mittels zwei Drehschiebern realisierbar ist. Mittels einer solchen Verteilvorrichtung kann auf relativ einfache Weise weitgehend zentral, d.h. mittels der Verteilvorrichtung, eine möglichst bedarfsgerechte Verteilung von Kühlmittel in der Hauptkühlkreisanordnung herstellbar und unterbrechbar ist.

Sofern, wie dies vorzugsweise vorgesehen ist, der Verbrennungsmotor sowohl einen Kühlkanal eines Zylindergehäuses als auch einen Kühlkanal eines Zylinderkopfs umfasst, kann weiterhin bevorzugt vorgesehen sein, dass die Verteilvorrichtung (mindestens) zwei zweite Einlässe aufweist, von denen einer mit einem Auslass des Verbrennungsmotors, der von dem Kühlkanal des Zylinderkopfs ausgebildet ist, und ein/der andere mit einem Auslass des Verbrennungsmotors, der von dem Kühlkanal des Zylindergehäuses ausgebildet ist, verbunden ist. Weiterhin bevorzugt kann dann noch vorgesehen sein, dass der mit dem Auslass des Verbrennungsmotors, der von dem Kühlkanal des Zylindergehäuses ausgebildet ist, verbundene Einlass der Verteilvorrichtung bedarfsweise verschließbar ist. Dadurch wird eine voneinander unabhängige Anpassung der Durchströmung einerseits des Kühlkanals des Zylinderkopfs und andererseits des Kühlkanals des Zylindergehäuses ermöglicht. Dadurch kann insbesondere auch ermöglicht werden, in jeder beliebigen der definierten Betriebsstellungen des Verteilsystems, insbesondere auch in der dritten und/oder der vierten Betriebsstellung, eine Durchströmung des Kühlkanals des Zylindergehäuses mit dem Kühlmittel zu verhindern, was zu einem möglichst schnellen Erreichen des Soll-Betriebstemperaturbereichs führen oder ein Halten der Betriebstemperatur des Verbrennungsmotors in diesem Soll-Betriebstemperaturbereich unterstützen kann.

Gemäß einer bevorzugten Weiterbildung eines erfindungsgemäßen Kraftfahrzeugs, das eine solche Verteilvorrichtung des Verteilsystems umfasst, kann weiterhin ein zwischen dem Auslass des Heizungswärmetauschers und dem ersten Einlass der Verteilvorrichtung angeordnetes erstes Steuerventil des Verteilsystems und ein zwischen dem dritten Kühlmittelauslass der Verteilvorrichtung und dem Kühlmitteleinlass des Ölkühlers angeordnetes zweites Steuerventil des Verteilsystems vorgesehen sein. Besonders bevorzugt kann das Verteilsystem der Hauptkühlkreisanordnung ausschließlich die Verteilvorrichtung sowie diese beiden Steuerventile, die insbesondere in Form von Schaltventilen, die lediglich zwei Schaltstellungen aufweisen, ausgebildet sein können, umfassen. Dadurch kann trotz einer relativ einfachen Ausgestaltung des Verteilsystems eine bedarfsgerechte Verteilung des Kühlmittels in der Hauptkühlkreisanordnung realisiert werden.

Um in sämtlichen vorgesehenen Betriebstellungen des Verteilsystems der Hauptkühlkreisanordnung und den daraus resultierenden Kühlkreisen eine Förderung des Kühlmittels zu gewährleisten, kann weiterhin bevorzugt
- eine zwischen einem Auslass (für das Kühlmittel) des ersten Steuerventils und dem Einlass (für das Kühlmittel) des Verbrennungsmotors angeordnete erste, vorzugsweise mechanisch d.h. mittels des Verbrennungsmotors antreibbare Kühlmittelpumpe und
- eine zwischen dem jeweiligen Auslass (für das Kühlmittel) des Heizungswärmetauschers und des Ölkühlers einerseits und dem Einlass (für das Kühlmittel) des ersten Steuerventils angeordnete zweite, vorzugsweise elektromotorisch antreibbare Kühlmittelpumpe und
- gegebenenfalls, d.h. sofern der vorzugsweise vorgesehene zusätzliche Kühlkreis mit der zweiten Heizvorrichtung umfasst ist, eine zwischen dem Auslass (für das Kühlmittel) des Heizungswärmetauschers und dem Einlass (für das Kühlmittel) der zweiten Heizvorrichtung angeordnete dritte, vorzugsweise elektromotorisch antreibbare Kühlmittelpumpe vorgesehen sein.

Das Kühlsystem eines erfindungsgemäßen Kraftfahrzeugs kann weiterhin bevorzugt eine von der Hauptkühlkreisanordnung und von der Zusatzkühlkreisanordnung separierte Nebenkühlkreisanordnung umfassen, in der Kühlmittel in einem einen Ladeluftkühler und einen Abgasturbolader der Brennkraftmaschine sowie einen Kühlmittelkühler umfassenden Kühlkreis förderbar ist. Der Ladeluftkühler und der Abgasturbolader (bzw. mindestens ein Kühlmittelkanal einer Abgasturbine und/oder eines Verdichters und/oder eines Lagerstuhls des Abgasturboladers) können dabei vorzugsweise in paralleler Anordnung in den Kühlkreis der Nebenkühlkreisanordnung integriert sein. Weiterhin bevorzugt kann die Nebenkühlkreisanordnung kein aktiv ansteuerbares Verteilsystem umfassen. Es kann folglich lediglich die Möglichkeit bestehen, das Kühlmittel entweder mittels einer vorzugsweise elektromotorisch antreibbaren Kühlmittelpumpe in dem Kühlkreis der Nebenkühlkreisanordnung zu fördern (gegebenenfalls mit einem mittels einer entsprechenden Leistungsansteuerung der Kühlmittelpumpe anpassbaren Volumenstrom) oder eine solche Förderung des Kühlmittels nicht durchzuführen, in dem die Kühlmittelpumpe nicht in Betrieb genommen wird. Ein Fördern von Kühlmittel in dem Kühlkreis der Nebenkühlkreisanordnung kann grundsätzlich in Kombination mit jeder beliebigen Betriebsstellung des Verteilsystems der Hauptkühlkreisanordnung erfolgen oder nicht erfolgen, wobei ein Fördern von Kühlmittel in dem Kühlkreis der Nebenkühlkreisanordnung hauptsächlich in einem V-Betrieb des Kraftfahrzeugs sinnvoll ist, da die Nebenkühlkreisanordnung primär oder ausschließlich der Kühlung eines Abgasturboladers der Brennkraftmaschine sowie von mittels des Abgasturboladers verdichteter Ladeluft, d.h. von Frischgas, das dem Verbrennungsmotor für eine anschließende Verbrennung zugeführt wird, vorgesehen ist.

Gemäß einer bevorzugten Weiterbildung eines erfindungsgemäßen Kraftfahrzeugs kann vorzugsweise ein Steuerventil der Zusatzkühlkreisanordnung, das vorzugsweise das einzige Steuerventil der Zusatzkühlkreisanordnung sein kann, vorgesehen sein. Dabei kann ein Einlass (für das Kühlmittel) des Steuerventils mit einem Auslass (für das Kühlmittel) der Traktionsbatterie verbunden sein. Weiterhin kann ein erster Auslass (für das Kühlmittel) des Steuerventils, gegebenenfalls unter Zwischenschaltung (ausschließlich) einer Kühlmittelpumpe, mit einem Einlass (für das Kühlmittel) des Chillers verbunden sein. Und schließlich kann ein zweiter Auslass (für das Kühlmittel) des Steuerventils, gegebenenfalls unter Zwischenschaltung (ausschließlich) einer Kühlmittelpumpe, mit einem Einlass (für das Kühlmittel) des Ladegeräts oder der Leistungselektronik verbunden sein. Bevorzugt kann das Steuerventil in Form eines Schaltventils ausgebildet sein, wobei in Abhängigkeit von der Schaltstellung jeweils einer der Auslässe verschlossen und der andere Auslass freigegeben ist. Eine solche Ausgestaltung eines erfindungsgemäßen Kraftfahrzeugs beziehungsweise der Zusatzkühlkreisanordnung ermöglicht in konstruktiv einfacher Weise die Realisierung der für die Zusatzkühlkreisanordnung vorgesehenen Kühlkreise.

Gemäß einer bevorzugten Ausgestaltungsform eines erfindungsgemäßen Kraftfahrzeugs kann vorgesehen sein, dass die Hauptkühlkreisanordnung als Hochtemperaturkühlkreisanordnung und die Nebenkühlkreisanordnung und/oder die Zusatzkühlkreisanordnung als Niedertemperaturkühlkreisanordnung(en) ausgelegt ist/sind. Dementsprechend kann die Hauptkühlkreisanordnung für einen höheren Betriebstemperaturbereich des darin befindlichen Kühlmittels im Vergleich zu der Nebenkühlkreisanordnung und/oder der Zusatzkühlkreisanordnung ausgelegt sein. Weiterhin bevorzugt kann die Nebenkühlkreisanordnung für einen höheren Betriebstemperaturbereich des darin befindlichen Kühlmittels im Vergleich zu der Zusatzkühlkreisanordnung ausgelegt sein, so dass es sich bei der Nebenkühlkreisanordnung auch um eine Mitteltemperaturkühlkreisanordnung handeln kann. Die Hauptkühlkreisanordnung kann dabei beispielsweise für eine Betriebstemperatur des darin aufgenommenen Kühlmittels, die zwischen 70°C und 110°C liegt, und/oder die Nebenkühlkreisanordnung für eine Betriebstemperatur des darin aufgenommenen Kühlmittels, die zwischen der Umgebungstemperatur und 90°C liegt, und/oder die Zusatzkühlkreisanordnung für eine Betriebstemperatur des darin aufgenommenen Kühlmittels, die zwischen der Umgebungstemperatur und 40°C liegt, ausgelegt sein.

Als "separierte" Ausbildung von Kühlkreisen oder Kühlkreisanordnungen wird erfindungsgemäß verstanden, dass diese keinen integralen Abschnitt, d.h. keinen Abschnitt, der sowohl Teil des/der einen Kühlkreises/Kühlkreisanordnung als auch des/der anderen Kühlkreises/Kühlkreisanordnung ist, umfassen. Es findet folglich im Wesentlichen kein Austausch von Kühlmittel zwischen den separierten Kühlkreisen/Kühlkreisanordnungen statt. Separierte Kühlkreise/Kühlkreisanordnungen können jedoch mit einem gemeinsamen Ausgleichsbehälter, insbesondere über jeweils mindestens eine Ausgleichsleitung sowie jeweils mindestens eine Entlüftungsleitung, indirekt verbunden sein. Als "Ausgleichsbehälter" wird dabei ein Reservoir für Kühlmittel des Kühlsystems verstanden, das dazu dient, insbesondere temperaturbedingte Ausdehnungen von Kühlmittel durch eine Veränderung des Füllstands des Kühlmittels in dem Ausgleichsbehälter auszugleichen. Dazu kann ein solcher Ausgleichsbehälter insbesondere teilweise mit dem Kühlmittel und teilweise mit einem Gas, insbesondere Luft, gefüllt sein.

Die Erfindung wird nachfolgend anhand eines in den Zeichnungen dargestellten Ausgestaltungsbeispiels näher erläutert. In den Zeichnungen zeigt, jeweils in vereinfachter Darstellung:
- Fig. 1:: ein erfindungsgemäßes Kraftfahrzeug in einer Seitenansicht;
- Fig. 2:: eine Hauptkühlkreisanordnung und eine Nebenkühlkreisanordnung eines Kühlsystems eines erfindungsgemäßen Kraftfahrzeugs mit einem Verteilsystem der Hauptkühlkreisanordnung in einer ersten Betriebsstellung;
- Fig. 3:: die Hauptkühlkreisanordnung und die Nebenkühlkreisanordnung des Kühlsystems mit dem Verteilsystem der Hauptkühlkreisanordnung in einer zweiten Betriebsstellung;
- Fig. 4:: die Hauptkühlkreisanordnung und die Nebenkühlkreisanordnung des Kühlsystems mit dem Verteilsystem der Hauptkühlkreisanordnung in einer dritten Betriebsstellung;
- Fig. 5:: die Hauptkühlkreisanordnung und die Nebenkühlkreisanordnung des Kühlsystems mit dem Verteilsystem der Hauptkühlkreisanordnung in einer vierten Betriebsstellung;
- Fig. 6:: die Hauptkühlkreisanordnung und die Nebenkühlkreisanordnung des Kühlsystems mit dem Verteilsystem der Hauptkühlkreisanordnung in einer fünften Betriebsstellung;
- Fig. 7:: die Hauptkühlkreisanordnung und die Nebenkühlkreisanordnung des Kühlsystems mit dem Verteilsystem der Hauptkühlkreisanordnung in einer sechsten Betriebsstellung;
- Fig. 8:: eine Zusatzkühlkreisanordnung des Kühlsystems mit einem Verteilsystem der Zusatzkühlkreisanordnung in einer ersten Betriebsstellung; und
- Fig. 9:: die Zusatzkühlkreisanordnung des Kühlsystems mit dem Verteilsystem der Zusatzkühlkreisanordnung in einer zweiten Betriebsstellung.

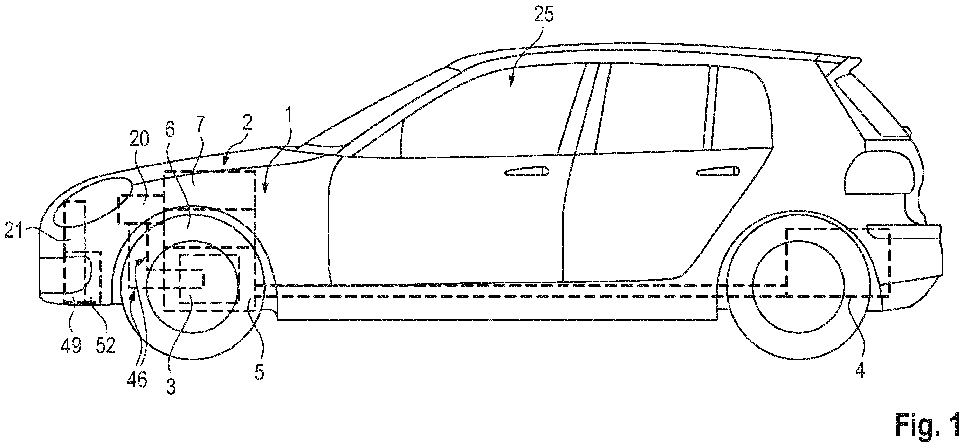

Die Fig. 1 zeigt ein erfindungsgemäßes Kraftfahrzeug. Dieses ist in Form eines Plug-in Hybridfahrzeugs ausgebildet und umfasst demnach einen in einem Motorraum 1 des Kraftfahrzeugs aufgenommenen Verbrennungsmotor 2 als Teil einer Brennkraftmaschine, die bedarfsweise zur Bereitstellung einer Fahrantriebsleistung für das Kraftfahrzeug vorgesehen ist. Weiterhin umfasst das Kraftfahrzeug einen elektrischen Traktionsmotor 3, der ebenfalls bedarfsweise zur Bereitstellung einer Fahrantriebsleistung für das Kraftfahrzeug vorgesehen ist und hierzu aus einer Traktionsbatterie 4 mit der dafür erforderlichen elektrischen Leistung versorgt werden kann. Der Traktionsmotor 3 ist zwischen einer Abtriebswelle des Verbrennungsmotors 2 und einer Kraftübertragung, vorzugsweise einem automatischen Schaltgetriebe 5 in einen Antriebsstrang des Kraftfahrzeugs integriert.

Der Verbrennungsmotor 2 kann beispielsweise als nach dem Otto- oder Diesel-Prinzip arbeitender Hubkolbenmotor ausgebildet sein, der ein Zylindergehäuse 6 mit darin ausgebildeten Zylindern sowie einen Zylinderkopf 7 umfassen kann.

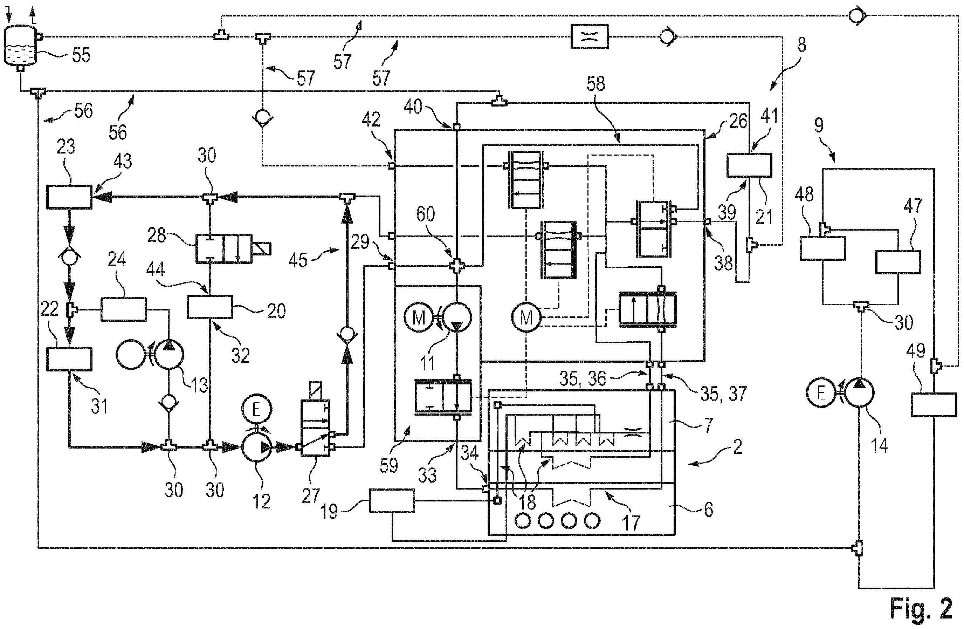

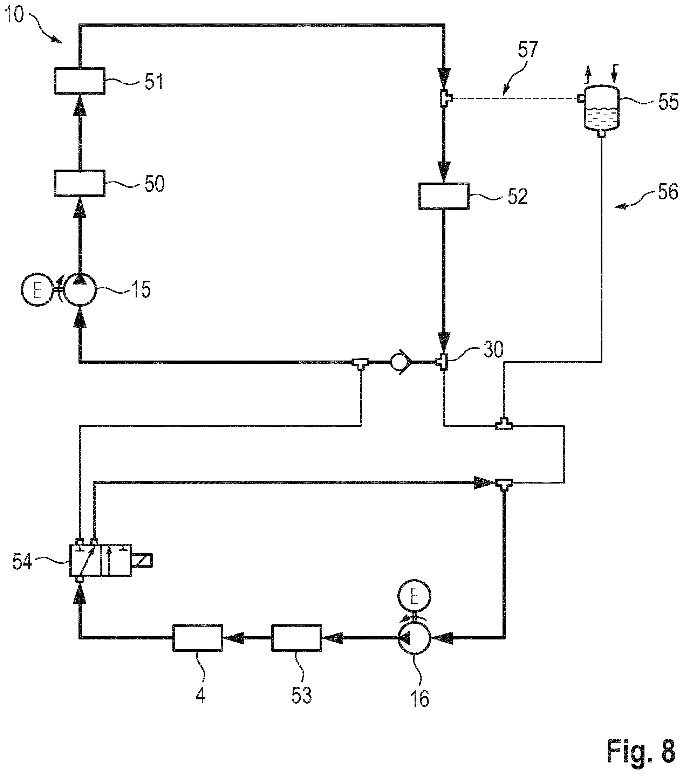

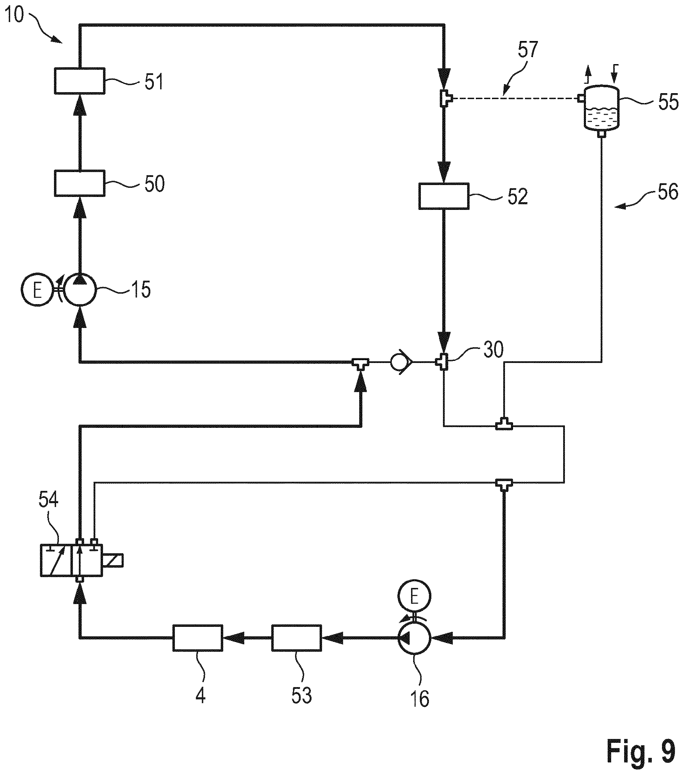

Der Verbrennungsmotor 2, der elektrische Traktionsmotor 3 und die Traktionsbatterie 4 sowie weitere Funktionskomponenten des Kraftfahrzeugs sind in ein Kühlsystem integriert. Ein solches Kühlsystem ist gemäß einer beispielhaften Ausgestaltungsform in den Fig. 2 bis 9 dargestellt. Dieses Kühlsystem umfasst eine Hauptkühlkreisanordnung 8 und eine Nebenkühlkreisanordnung 9 (vgl. Fig. 2 bis 7) sowie eine Zusatzkühlkreisanordnung 10 (vgl. Fig. 8 und 9), wobei diese Kühlkreisanordnungen 8, 9, 10 voneinander separiert ausgebildet sind. Jede dieser Kühlkreisanordnungen 8, 9, 10 bildet einen oder mehrere Kühlkreise aus, innerhalb dessen/derer ein flüssiges Kühlmittel bedarfsweise gefördert werden kann. Hierzu sind jeweils eine oder mehrere Kühlmittelpumpen 11-16 in die Kühlkreisanordnungen 8, 9, 10 integriert.

Die Hauptkühlkreisanordnung 8 dient einer direkten Temperierung des Verbrennungsmotors 2, von Motoröl zur Schmierung des Verbrennungsmotors 2, von (Getriebe-)ÖI des Schaltgetriebes 5 sowie, über das Getriebeöl, d.h. indirekt, des elektrischen Traktionsmotors 3. Die Hauptkühlkreisanordnung 8 umfasst hierzu Kühlkanäle 17, 18 des Zylindergehäuses 6 und des Zylinderkopfs 7 (sowie eines zu dem Zylinderkopf 7 gehörigen Abgaskrümmers) des Verbrennungsmotors 2, einen Motorölkühler 19 und einen Getriebeölkühler 20. Weiterhin umfasst die Hauptkühlkreisanordnung 8 einen Kühlmittelkühler 21, drei der Kühlmittelpumpen (die Kühlmittelpumpen 11, 12, 13), einen Heizungswärmetauscher 22 sowie zwei elektrische Heizvorrichtungen 23, 24. Der Kühlmittelkühler 21 dient dazu, das diesen bedarfsweise durchströmende Kühlmittel der Hauptkühlkreisanordnung 8 durch einen Übergang von Wärmeenergie auf Umgebungsluft, die den Kühlmittelkühler 21 ebenfalls durchströmt, zu kühlen. Der Heizungswärmetauscher 22 dient dagegen dazu, bei Bedarf Umgebungsluft, die zur Klimatisierung eines Innenraums 25 des Kraftfahrzeugs dient, aufzuwärmen und dadurch zu temperieren. Um eine Funktionalität des Heizungswärmetauschers 22 auch bei einem Stillstand des Verbrennungsmotors 2 und folglich bei einem Wegfall des Verbrennungsmotors 2 als primäre Wärmequelle zur Klimatisierung des Innenraums 25 des Kraftfahrzeugs zu gewährleisten, können die elektrischen Heizvorrichtungen 23, 24 bedarfsweise in Betrieb genommen werden, durch die dann in ausreichendem Maße Wärmeenergie in das anschließend den Heizungswärmetauscher 22 durchströmende Kühlmittel übertragen wird.

Zur bedarfsgerechten Verteilung des Kühlmittels auf die Kühlkreise der Hauptkühlkreisanordnung 8 umfasst diese ein Verteilsystem, das eine Verteilvorrichtung 26 sowie zwei Schaltventile 27, 28 umfasst. Die Verteilvorrichtung 26 weist zwei Drehschieber 58, 59 auf, mittels derer verschiedene Einlässe und Auslässe der Verteilvorrichtung 26 bedarfsgerecht freigegeben oder versperrt werden können. In den Fig. 2 bis 7 ist die Funktionalität der Drehschieber 58, 59 mittels Ventilschaltzeichen dargestellt.

Konkret umfasst die Verteilvorrichtung 26
- einen ersten Einlass 29, der, unter Zwischenschaltung eines Verteilers 30, einer (zweiten) Kühlmittelpumpe 12 der Hauptkühlkreisanordnung 8 und eines ersten Schaltventils 27 der Hauptkühlkreisanordnung 8, mit jeweils einem Auslass 31, 32 des Heizungswärmetauschers 22 und des Getriebeölkühlers 20 verbunden ist;
- einen ersten Auslass 33, der mit einem Einlass 34 des Verbrennungsmotors 2 verbunden ist;
- zwei zweite Einlässe 35, von denen einer mit einem Auslass 36 des Zylinderkopfs und der anderen mit einem Auslass 37 des Zylindergehäuses 6 verbunden ist;
- einen zweiten Auslass 38, der mit einem Einlass 39 des Kühlmittelkühlers 21 verbunden ist;
- einen dritten Einlass 40, der mit einem Auslass 41 des Kühlmittelkühlers 21 verbunden ist; und
- einen dritten Auslass 42, der über einen Verteiler 30 mit jeweils einem Einlass 43, 44 der ersten Heizvorrichtung 23 und des Getriebeölkühlers 20 (mit diesem zusätzlich über das zweite Schaltventil 28) verbunden ist.

In einer ersten Betriebsstellung des Verteilsystems der Hauptkühlkreisanordnung 8 gemäß der Fig. 2 ist Kühlmittel ausschließlich in einem den Heizungswärmetauscher 31 und die erste Heizvorrichtung 23 umfassenden ersten Kühlkreis förderbar. Hierzu ist das erste Schaltventil 27 in eine Stellung geschaltet, in der dieses das von der zweiten, elektromotorisch angetriebenen Kühlmittelpumpe 12 geförderte Kühlmittel über eine Umgehungsleitung 45 führt, wodurch dieses nicht zu der Verteilvorrichtung 26 und damit auch nicht zu den dieser nachgeschalteten Funktionskomponenten, d.h. dem Motorölkühler 19, dem Verbrennungsmotor 2 und dem Kühlmittelkühler 21 geführt wird. Zudem ist das zweite Schaltventil 28 in eine Sperrstellung verstellt, in der dieses einen Kühlmitteldurchfluss sperrt. Die erste, mechanisch antreibbare Kühlmittelpumpe 11 und die dritte, elektromotorisch antreibbare Kühlmittelpumpe 13 werden dabei nicht betrieben. Die erste Betriebsstellung ist in einem E-Betrieb des Kraftfahrzeugs, in dem sich dieses bei nicht betriebenem Verbrennungsmotor 2 in einem Fahrbetrieb befindet, eingestellt. Ein möglicher Heizleistungsbedarf des Heizungswärmetauschers 22 wird dann bedarfsgerecht durch die erste Heizvorrichtung 23, die beispielsweise aus der Traktionsbatterie 4 mit der dafür erforderlichen elektrischen Energie versorgt wird, gedeckt.

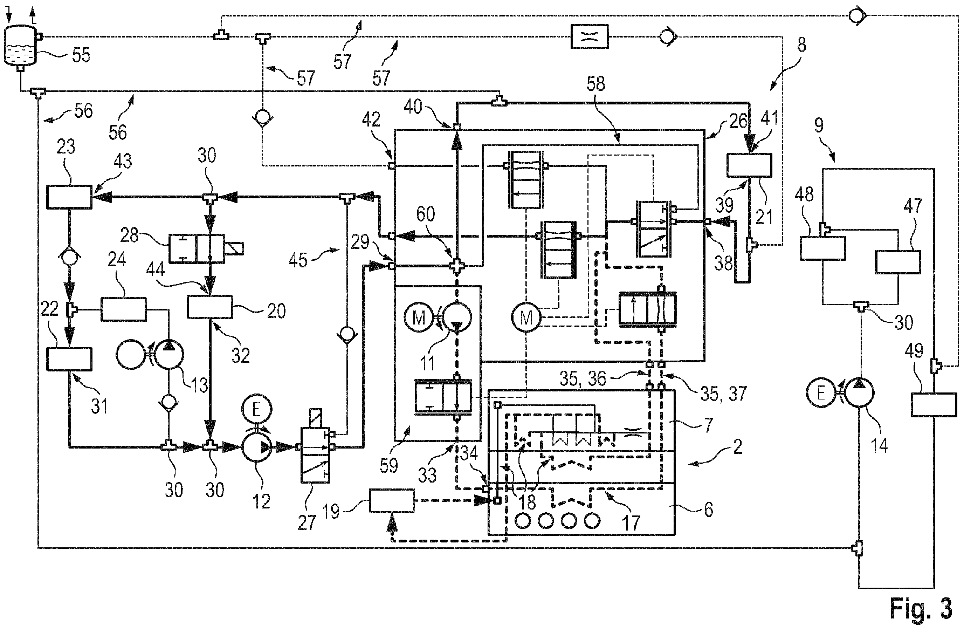

In einer zweiten Betriebsstellung des Verteilsystems der Hauptkühlkreisanordnung 8 gemäß der Fig. 3 ist Kühlmittel ausschließlich in einem zumindest den Kühlmittelkühler 21, den Getriebeölkühler 20, die erste Heizvorrichtung 27 und den Heizungswärmetauscher 22 umfassenden zweiten Kühlkreis förderbar, wobei der Getriebeölkühler 20 einerseits und die erste Heizvorrichtung 23 sowie der Heizungswärmetauscher 22 andererseits parallel verschaltet sind. Hierzu leitet das erste Schaltventil 27 das von der zweiten Kühlmittelpumpe 12 geförderte Kühlmittel zu dem ersten Einlass 29 der Verteilvorrichtung 26, wobei dieses an einem Kreuzverteilter 60 der Verteilvorrichtung 26 zu dem Kühlmittelkühler 21 und daran anschließend zu den zwei parallelen Strängen des zweiten Kühlkreises, von denen einer die erste Heizvorrichtung 23 und den Heizungswärmetauscher 22 und der andere den Getriebeölkühler 20 umfasst, geführt wird. Eine Durchlassstellung des zweiten Schaltventils 28 gewährleistet dabei eine Durchströmung des Getriebeölkühlers 20.

In Abhängigkeit der Funktionsstellung des zweiten Drehschiebers 59 der Verteilvorrichtung 26 kann auch ein (kleinerer) Teil des an dem Kreuzverteiler 60 ankommenden Kühlmittels über den ersten Auslass 33 zu dem Einlass 34 des Verbrennungsmotors 2 geführt werden, was in der Fig. 3 durch eine gestrichelte Darstellung des Kühlmittelflusses dargestellt ist. Innerhalb des Verbrennungsmotors 2 wird dieses Kühlmittel dann auf einerseits Kühlmittelkanäle 18 des Zylinderkopfs 7, den Kühlmittelkanal 17 des Zylindergehäuses 6 sowie auf eine den Motorölkühler 19 integrierende Kühlmittelleitung, die endseitig in einen der Kühlmittelkanäle 18 des Zylinderkopfs 7 mündet, verteilt. Mittels der Verteilvorrichtung 26 kann dabei beeinflusst werden, ob Kühlmittel durch den Kühlmittelkanal 17 des Zylindergehäuses 6 geführt wird, oder nicht. Die auslassseitig des Verbrennungsmotors 2 in die Verteilvorrichtung 26 zurückgeführten Kühlmittelströme werden dann mit dem von dem Kühlmittelkühler 21 kommenden Kühlmittelströmung vereint und zu dem Getriebeölkühler 20, der ersten Heizvorrichtung 23 und dem Heizungswärmetauscher 22 zurückgeführt. Sofern der zweite Drehschieber 59 eine Kühlmittelströmung durch den Verbrennungsmotor 2 freigibt, umfasst der zweite Kühlkreis zum einen die zwei ersten, parallel verschalteten Teilstränge mit einerseits dem Getriebeölkühler 20 und andererseits der ersten Heizvorrichtung 23 und dem Heizungswärmetauscher 22, sowie zum anderen zwei zweite, parallel verschaltete Teilstränge mit einerseits dem Kühlmittelkühler 21 und andererseits dem Verbrennungsmotor 2.

Die dritte Kühlmittelpumpe 13 wird in der zweiten Betriebsstellung des Verteilsystems der Hauptkühlkreisanordnung nicht betrieben. Dasselbe kann für die erste, mechanisch antreibbare Kühlmittelpumpe 11 vorgesehen sein , was insbesondere dann gilt, sofern, wie dies vorzugsweise vorgesehen ist, die zweite Betriebsstellung in einem E-Betrieb des Kraftfahrzeugs eingestellt ist und der Verbrennungsmotor demnach nicht in Betrieb genommen ist. Die zweite Betriebsstellung kann insbesondere dann eingestellt werden, wenn bereits ein Kühlleistungsbedarf für mindestens eine mittels der Hauptkühlkreisanordnung direkt oder indirekt zu kühlende Funktionskomponente gegeben ist. Dabei kann insbesondere auch ein Kühlleistungsbedarf für den elektrischen Traktionsmotor 3 gegeben sein, der über eine Ölleitung 46 (vgl. Fig. 1) mit dem Getriebeölkühler 20 und auch mit dem Schaltgetriebe 5 verbunden ist.

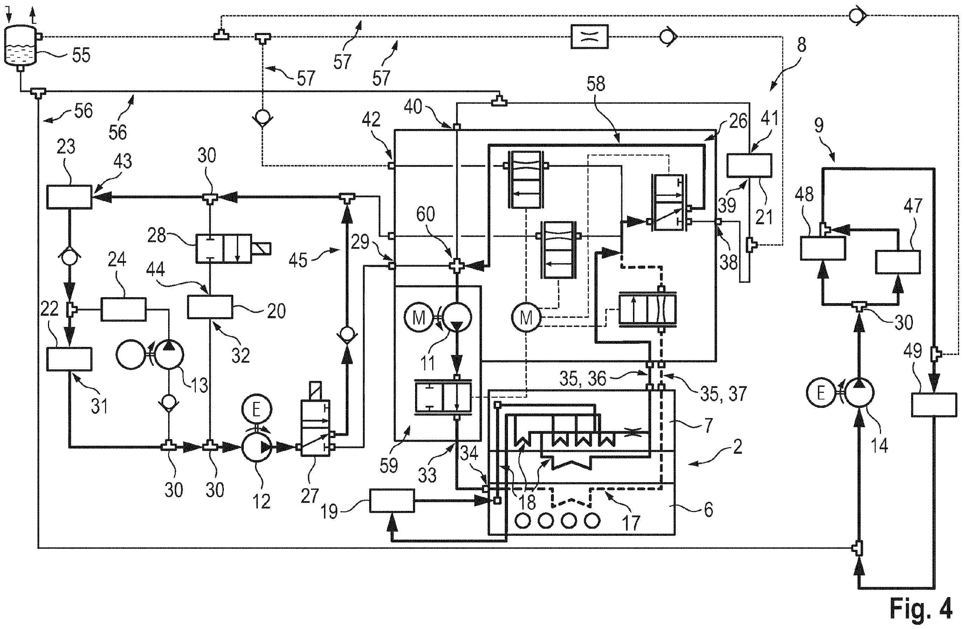

In einer dritten Betriebsstellung des Verteilsystems der Hauptkühlkreisanordnung gemäß der Fig. 4 ist Kühlmittel beziehungsweise sind unterschiedliche Kühlmittelströme ausschließlich in dem ersten Kühlkreis (gemäß der ersten Betriebsstellung des Verteilsystems der Hauptkühlkreisanordnung 8 mit den entsprechenden Schaltstellungen der Schaltventile 27, 28; vgl. Fig. 2) sowie, mittels der ersten Kühlmittelpumpe 11, in einem den Verbrennungsmotor 2 und den Motorölkühler 19 umfassenden und den Kühlmittelkühler 21 ausschließenden, dritten Kühlkreis förderbar, wobei der dritte Kühlkreis von dem ersten Kühlkreis separiert ist. Diese dritte Betriebsstellung ist in einem V-Betrieb des Kraftfahrzeugs vorgesehen, in dem sich dieses in einem Fahrbetrieb befindet, wobei eine während des Fahrbetriebs erforderliche Fahrantriebsleistung zumindest teilweise von dem Verbrennungsmotor 2 bereitgestellt wird. Die dritte Betriebsstellung kann insbesondere nach einem Kaltstart des Verbrennungsmotors 2 vorgesehen sein. In der dritten Betriebsstellung kann einerseits der Innenraum 25 des Kraftfahrzeugs mittels der ersten Heizvorrichtung 23 und dem Heizungswärmetauscher 22 gemäß der ersten Betriebsstellung temperiert werden, während der Verbrennungsmotor 2 parallel möglichst schnell bis zum Erreichen seines Soll-Betriebstemperaturbereichs erwärmt werden kann.

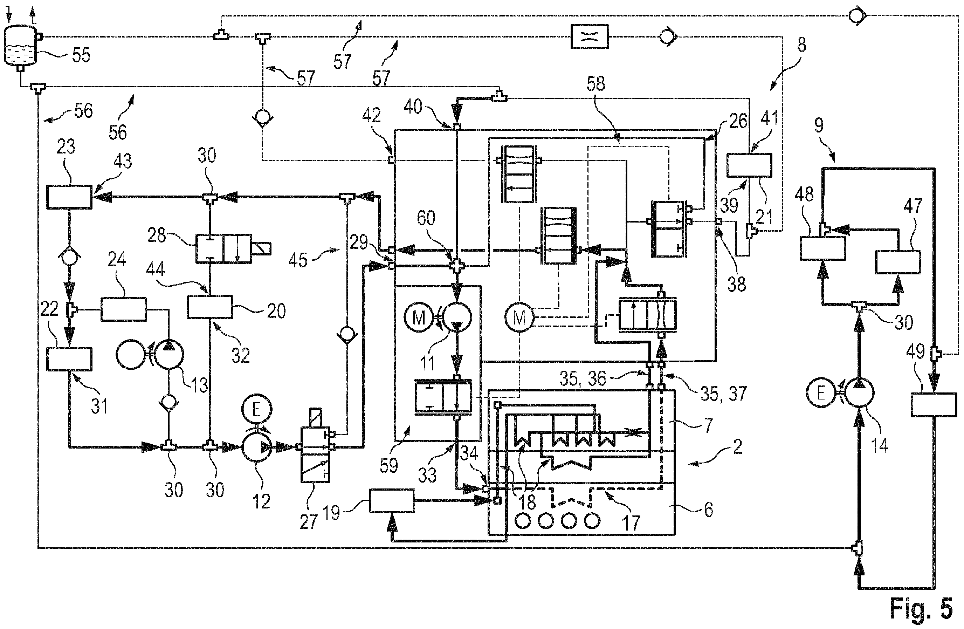

In einer vierten Betriebsstellung des Verteilsystems der Hauptkühlkreisanordnung 8 gemäß der Fig. 5 ist Kühlmittel mittels der ersten Kühlmittelpumpe 11 und bedarfsweise auch mittels der zweiten Kühlmittelpumpe 12 in einem den Verbrennungsmotor 2, die erste Heizvorrichtung 23 und den Heizungswärmetauscher 22 umfassenden vierten Kühlkreis förderbar. Auch diese vierte Betriebsstellung kann insbesondere in einem V-Betrieb des Kraftfahrzeugs vorgesehen sein, wobei dann Abwärme des Verbrennungsmotors 2 für ein Temperieren des Innenraums 25 des Kraftfahrzeugs durch einen entsprechenden Wärmeübergang in dem Heizungswärmetauscher 22 genutzt werden kann. Die vierte Betriebsstellung kann demnach insbesondere dann vorteilhaft eingestellt sein, wenn der Verbrennungsmotor 2 eine innerhalb seines Soll-Betriebstemperaturbereichs liegende Betriebstemperatur aufweist, In der vierten Betriebsstellung des Verteilsystems der Hauptkühlkreisanordnung 8 wird das Kühlmittel im Wesentlichen nicht durch den Kühlmittelkühler 21 gefördert, was in dem relativ großen Strömungswiderstands, den der Kühlmittelkühler 21 aufweist, begründet ist.

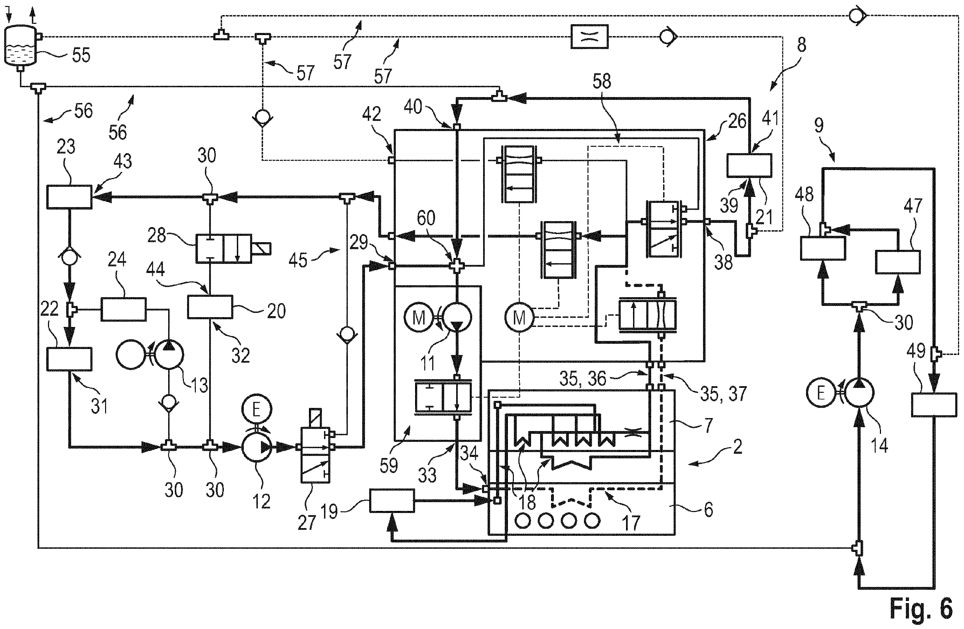

In einer weiteren, fünften Betriebsstellung gemäß der Fig. 6 wird Kühlmittel dagegen zusätzlich auch durch den Kühlmittelkühler 21 beziehungsweise zusätzlichen (neben dem vierten Kühlkreis) auch durch einen den Kühlmittelkühler 21 und den Verbrennungsmotor 2 umfassenden weiteren, fünften Kühlkreis (der im Bereich des Verbrennungsmotors 2 mit dem vierten Kühlkreis integral ausgebildet ist) geführt, was durch eine Funktionsstellung der Verteilvorrichtung 26, in der diese eine Kühlmittelströmung über den dritten Auslass 42 entsprechend drosselt, realisiert wird. Die Drosselung kann dabei auch variabel zu sein, um eine bedarfsgerechte Verteilung von Kühlmittel auf den vierten und fünften Kühlkreis zu erreichen.

Eine Auswahl der vierten oder fünften Betriebsstellung kann dabei insbesondere in Abhängigkeit davon erfolgen, ob die in das Kühlmittel übertragene Abwärme des Verbrennungsmotors 2 über dem Heizleistungsbedarf des Heizungswärmetauschers 22 liegt.

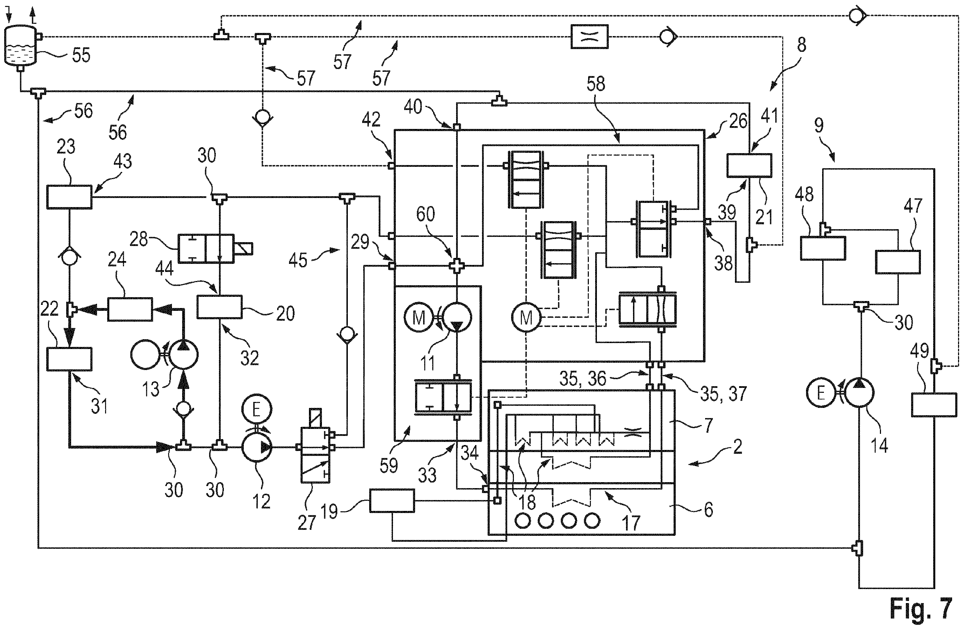

In einer zusätzlichen, sechsten Betriebsstellung des Verteilsystems der Hauptkühlkreisanordnung 8 gemäß der Fig. 7 ist das Kühlmittel mittels der dritten Kühlmittelpumpe 13 ausschließlich in einem den Heizungswärmetauscher 22 und die zweite Heizvorrichtung 24 umfassenden (sechsten) Kühlkreis förderbar. Diese sechste Betriebsstellung ist für einen Nichtbetrieb des Kraftfahrzeugs vorgesehen, um eine Standheizungsfunktionalität zu realisieren. Ein Heizleistungsbedarf des Heizungswärmetauschers 22 wird dann mittels der zweiten Heizvorrichtung 24 gedeckt, die beispielsweise aus der Traktionsbatterie 4 mit der dafür erforderlichen elektrischen Energie versorgt wird. Durch eine Integration lediglich des Heizungswärmetauschers 22 und der zweiten Heizvorrichtung 24 in den entsprechend kleinen sechsten Kühlkreis kann die thermische Masse dieses Kühlkreises möglichst gering gehalten werden, so dass ein möglichst großer Teil der von der zweiten Heizvorrichtung 24 zur Verfügung gestellten Heizleistung in dem Heizungswärmetauscher 22 zur Temperierung des Innenraums 25 des Kraftfahrzeugs genutzt werden kann.

Die Nebenkühlkreisanordnung 9 dient einer direkten Temperierung eines Abgasturboladers 47 der Brennkraftmaschine des Kraftfahrzeugs sowie von mittels des Abgasturboladers 47 verdichtetem Frischgas (Ladeluft), die hierzu über einen Ladeluftkühler 48, der, ebenso wie ein Frischgasverdichter (nicht dargestellt) des Abgasturboladers 47, in einen Frischgasstrang der Brennkraftmaschine (nicht dargestellt) integriert ist, geführt wird. Der Abgasturbolader 47 beziehungsweise mindestens ein darin ausgebildeter Kühlmittelkanal sowie der Ladeluftkühler 48 sind dabei in parallel verlaufende Abschnitte eines einzigen Kühlkreises der Nebenkühlkreisanordnung 9 integriert. In diesem Kühlkreis ist weiterhin noch ein Kühlmittelkühler 49 sowie die elektromotorisch antreibbare Kühlmittelpumpe 14 der Nebenkühlkreisanordnung 9 integriert. Kühlmittel wird mittels der Kühlmittelpumpe 14 zumindest zeitweise und mit anpassbarer Förderleistung in dem Kühlkreis der Nebenkühlkreisanordnung 9 gefördert, wenn der Verbrennungsmotor 2 in Betrieb genommen ist. Dies kann insbesondere in Kombination mit einem Betrieb der Hauptkühlkreisanordnung 8 mit dem dazugehörigen Verteilsystem in der dritten bis fünften Betriebsstellung gemäß den Fig. 4 bis 6 vorgesehen sein.

Die Zusatzkühlkreisanordnung 10 (vgl. Fig. 8 und 9) dient einer direkten Temperierung der Traktionsbatterie 4, einer Leistungselektronik 50 und eines Ladegeräts 51 für die Traktionsbatterie 4.

In einer ersten Betriebsstellung des Verteilsystems der Zusatzkühlkreisanordnung 10, das lediglich ein einziges Schaltventil 54 umfasst, ist gemäß der Fig. 8 Kühlmittel mittels einer ersten, elektromotorisch antreibbaren Kühlmittelpumpe 15 der Zusatzkühlkreisanordnung 10 in einem die Leistungselektronik 50, das Ladegerät 51 und einen Kühlmittelkühler 52 umfassenden ersten Kühlkreis der Zusatzkühlkreisanordnung 10 sowie mittels einer zweiten, elektromotorisch antreibbaren Kühlmittelpumpe 16 in einem die Traktionsbatterie 4 und einen Chiller 53 umfassenden zweiten Kühlkreis der Zusatzkühlkreisanordnung 10 förderbar. Dies ermöglicht, die besonders temperatursensitive Traktionsbatterie 4 bedarfsgerecht mittels des Chillers 53 beziehungsweise mittels einer den Chiller 53 umfassenden Kältemaschine (im Übrigen nicht dargestellt) zu kühlen, während das Ladegerät 51 und die Leistungselektronik 50, die weniger temperatursensitiv sind, bedarfsweise mittels des Kühlmittelkühlers 52 der Zusatzkühlkreisanordnung 10 gekühlt werden können.

In einer zweiten Betriebsstellung des Verteilsystems beziehungsweise des Schaltventils 54 der Zusatzkühlkreisanordnung 10 ist Kühlmittel gemäß der Fig. 9 ausschließlich in einem das Ladegerät 21, die Leistungselektronik 50, den Kühlmittelkühler 52, den Chiller 53 und die Traktionsbatterie 4 umfassenden, dritten Kühlkreis der Zusatzkühlkreisanordnung 10 förderbar. Dies ermöglicht, die Traktionsbatterie 4 sowie das Ladegerät 51 und die Leistungselektronik 50 ausschließlich mittels des Kühlmittelkühlers 52 zu kühlen, was einen mit einem Betrieb der Kältemaschine verbundenen Energieverbrauch vermeiden kann.

Ein Betrieb der Zusatzkühlkreisanordnung 10 kann vollkommen unabhängig von einem möglichen Betrieb oder Nichtbetrieb der Hauptkühlkreisanordnung 8 und der Nebenkühlkreisanordnung 9 erfolgen.

Das Kühlsystem des Kraftfahrzeugs umfasst weiterhin zwei Ausgleichsbehälter 55, die teilweise mit Kühlmittel und teilweise mit Luft gefüllt sind. Einer dieser Ausgleichsbehälter 55 ist dabei der Hauptkühlkreisanordnung 8 und der Nebenkühlkreisanordnung 9 und der andere der Zusatzkühlkreisanordnung 10 zugeordnet. Über jeweils eine Verbindungsleitung 56, die aus einem das jeweilige Kühlmittel aufnehmenden (unteren) Abschnitt des dazugehörigen Ausgleichsbehälters 55 abgeht, sind die Ausgleichsbehälter 55 jeweils mit den zugehörigen Kühlkreisanordnungen 8, 9, 10 fluidleitend verbunden. Gegebenenfalls kann jedoch auf die zu der Nebenkühlkreisanordnung 9 führende Verbindungsleitung 56 verzichtet werden. Weiterhin verbinden Entlüftungsleitungen 57 die einzelnen Kühlkreisanordnungen 8, 9, 10 mit dem die Luft aufnehmenden (oberen) Abschnitt des jeweils zugehörigen Ausgleichsbehälters 55.

Gemäß einer alternativen Ausgestaltung des in den Fig. 2 bis 9 dargestellten Kühlsystems kann vorgesehen sein, Kühlmittel, das von dem Motorölkühler 19 kommt, nicht zu dem Verbrennungsmotor 2 zu führen, sondern in die Kühlmittelleitung, die von dem Kühlmittelkühler 21 zu dem dritten Einlass 40 der Verteilvorrichtung führt, einzuleiten. Dadurch kann zumindest zeitweise ein erhöhter Kühlmittelmassenstrom durch den Motorölkühler 19 realisiert werden.

### Bezugszeichenliste

- 1: Motorraum des Kraftfahrzeugs
- 2: Verbrennungsmotor
- 3: elektrischer Traktionsmotor
- 4: Traktionsbatterie
- 5: Schaltgetriebe
- 6: Zylindergehäuse
- 7: Zylinderkopf
- 8: Hauptkühlkreisanordnung
- 9: Nebenkühlkreisanordnung
- 10: Zusatzkühlkreisanordnung
- 11: erste Kühlmittelpumpe der Hauptkühlkreisanordnung
- 12: zweite Kühlmittelpumpe der Hauptkühlkreisanordnung
- 13: dritte Kühlmittelpumpe der Hauptkühlkreisanordnung
- 14: Kühlmittelpumpe der Nebenkühlkreisanordnung
- 15: erste Kühlmittelpumpe der Zusatzkühlkreisanordnung
- 16: zweite Kühlmittelpumpe der Zusatzkühlkreisanordnung
- 17: Kühlkanal des Zylindergehäuses
- 18: Kühlkanal des Zylinderkopfs
- 19: Motorölkühler
- 20: Getriebeölkühler
- 21: Kühlmittelkühler der Hauptkühlkreisanordnung
- 22: Heizungswärmetauscher
- 23: erste Heizvorrichtung
- 24: zweite Heizvorrichtung
- 25: Innenraum des Kraftfahrzeugs
- 26: Verteilvorrichtung des Verteilsystems der Hauptkühlkreisanordnung
- 27: erstes Schaltventil des Verteilsystems der Hauptkühlkreisanordnung
- 28: zweites Schaltventil des Verteilsystems der Hauptkühlkreisanordnung
- 29: erster Einlass der Verteilvorrichtung
- 30: Verteiler
- 31: Auslass des Heizungswärmetauschers
- 32: Auslass des Getriebeölkühlers
- 33: erster Auslass der Verteilvorrichtung
- 34: Einlass des Verbrennungsmotors
- 35: zweiter Einlass der Verteilvorrichtung
- 36: Auslass des Zylinderkopfs
- 37: Auslass des Zylindergehäuses
- 38: zweiter Auslass der Verteilvorrichtung
- 39: Einlass des Kühlmittelkühlers
- 40: dritter Einlass der Verteilvorrichtung
- 41: Auslass des Kühlmittelkühlers
- 42: dritter Auslass der Verteilvorrichtung
- 43: Einlass der ersten Heizvorrichtung
- 44: Einlass des Getriebeölkühlers
- 45: Umgehungsleitung der Hauptkühlkreisanordnung
- 46: Ölleitung
- 47: Abgasturbolader
- 48: Ladeluftkühler
- 49: Kühlmittelkühler der Nebenkühlkreisanordnung
- 50: Leistungselektronik
- 51: Ladegerät
- 52: Kühlmittelkühler der Zusatzkühlkreisanordnung
- 53: Chiller
- 54: Schaltventil des Verteilsystems der Zusatzkühlkreisanordnung
- 55: Ausgleichsbehälter
- 56: Verbindungsleitung
- 57: Entlüftungsleitung
- 58: erster Drehschieber der Verteilvorrichtung
- 59: zweiter Drehschieber der Verteilvorrichtung
- 60: Kreuzverteiler der Verteilvorrichtung

## Patentansprüche

1. Kraftfahrzeug mit
- einer Brennkraftmaschine, die einen Verbrennungsmotor (2), aufweist,
- einem elektrischen Traktionsmotor (3),
- einer Traktionsbatterie (4),und
- einem Kühlsystem, das eine Hauptkühlkreisanordnung (8) umfasst, in die der Verbrennungsmotor (2), ein Kühlmittelkühler (21), ein Heizungswärmetauscher (22), eine erste Heizvorrichtung (23), mittel der Heizleistung zur Verfügung stellbar ist, ein Ölkühler (20) und ein Verteilsystem integriert sind, wobei
- in einer ersten Betriebsstellung des Verteilsystems Kühlmittel in einem
• den Heizungswärmetauscher (22) und
• die erste Heizvorrichtung (23) umfassenden ersten Kühlkreis förderbar ist,
- in einer zweiten Betriebsstellung des Verteilsystems Kühlmittel in einem
• den Kühlmittelkühler (21) und
• den Ölkühler (20) umfassenden zweiten Kühlkreis förderbar ist,
- in einer dritten Betriebsstellung des Verteilsystems Kühlmittel
• in dem ersten Kühlkreis und
• in einem den Verbrennungsmotor (2) umfassenden und den Kühlmittelkühler (21) ausschließenden dritten Kühlkreis förderbar ist, und
- in einer vierten Betriebsstellung des Verteilsystems Kühlmittel in einem
• den Verbrennungsmotor (2) und
• den Heizungswärmetauscher (22) umfassenden vierten Kühlkreis förderbar ist,
**gekennzeichnet durch** eine von der Hauptkühlkreisanordnung (8) separierte Zusatzkühlkreisanordnung (10), in die ein Ladegerät (51) für die Traktionsbatterie (4) und/oder eine Leistungselektronik (50) sowie die Traktionsbatterie (4), ein Kühlmittelkühler (52), ein Chiller (53) und ein Verteilsystem integriert sind, wobei
- in einer ersten Betriebsstellung des Verteilsystems der Zusatzkühlkreisanordnung (10) Kühlmittel
• in einem das Ladegerät (51) und/oder die Leistungselektronik (50) sowie den Kühlmittelkühler (52) umfassenden ersten Kühlkreis förderbar ist und
• in einem die Traktionsbatterie (4) und den Chiller (53) umfassenden zweiten Kühlkreis förderbar ist
und
- in einer zweiten Betriebsstellung des Verteilsystems der Zusatzkühlkreisanordnung (10) Kühlmittel in einem das Ladegerät (51) und/oder die Leistungselektronik (50) sowie die Traktionsbatterie (4), den Kühlmittelkühler (52) und den Chiller (35) umfassenden dritten Kühlkreis förderbar ist.

2. Kraftfahrzeug gemäß Anspruch 1, **dadurch gekennzeichnet, dass** der Ölkühler (20) über eine Ölleitung (46) mit dem elektrischen Traktionsmotor (3) verbunden ist.

3. Kraftfahrzeug gemäß Anspruch 1 oder 2, **dadurch gekennzeichnet, dass** in einer weiteren Betriebsstellung des Verteilsystems Kühlmittel
• in dem vierten Kühlkreis und
• in einem den Verbrennungsmotor (2) umfassenden und den Kühlmittelkühler (21) umfassenden, weiteren Kühlkreis förderbar ist

4. Kraftfahrzeug gemäß einem der vorhergehenden Ansprüche, **dadurch gekennzeichnet, dass** in die Hauptkühlkreisanordnung (8) zusätzlich eine zweite Heizvorrichtung (24) integriert ist, wobei in einer zusätzlichen Betriebsstellung des Verteilsystems Kühlmittel in einem den Heizungswärmetauscher (22) und die zweite Heizvorrichtung (24) umfassenden zusätzlichen Kühlkreis förderbar ist.

5. Kraftfahrzeug gemäß einem der vorhergehenden Ansprüche, **dadurch gekennzeichnet, dass** das Verteilsystem eine Verteilvorrichtung (26) umfasst, die
- einen ersten Einlass (29) aufweist, der mit jeweils einem Auslass (30, 31) des Heizungswärmetauschers (22) und des Ölkühlers (20) verbunden ist, und
- einen ersten Auslass (33) aufweist, der mit einem Einlass (34) des Verbrennungsmotors (2) verbunden ist, und
- einen zweiten Einlass (35) aufweist, der mit einem Auslass (36, 37) des Verbrennungsmotors (22) verbunden ist, und
- einen zweiten Auslass (38) aufweist, der mit einem Einlass (39) des Kühlmittelkühlers (21) verbunden ist, und
- einen dritten Einlass (40) aufweist, der mit einem Auslass (41) des Kühlmittelkühlers (21) verbunden ist; und
- einen dritten Auslass (42) aufweist, der mit jeweils einem Einlass (43, 44) der ersten Heizvorrichtung (23) und des Ölkühlers (20) verbunden ist.

6. Kraftfahrzeug gemäß Anspruch 5, **dadurch gekennzeichnet, dass** eine fluidleitende Verbindung zwischen zumindest einigen der Einlässe (29, 35, 40) und der Auslässe (33, 38, 42) der Verteilvorrichtung 26 mittels eines Drehschiebers (58, 59) herstellbar und unterbrechbar ist.

7. Kraftfahrzeug gemäß Anspruch 5 oder 6, **gekennzeichnet durch**
- ein zwischen dem Auslass (31) des Heizungswärmetauschers (22) und dem ersten Einlass (29) der Verteilvorrichtung (26) angeordnetes erstes Steuerventil (27) des Verteilsystems und
- ein zwischen dem dritten Auslass (42) der Verteilvorrichtung (26) und dem Einlass (44) des Ölkühlers (20) angeordnetes zweites Steuerventil (28) des Verteilsystems.

8. Kraftfahrzeug gemäß Anspruch 7, **gekennzeichnet durch**
- eine zwischen einem Auslass des ersten Steuerventils (27) und dem Einlass (34) des Verbrennungsmotors (2) angeordnete, erste Kühlmittelpumpe (11) und
- eine jeweils zwischen dem Auslass (31, 32) des Heizungswärmetauschers (22) und des Ölkühlers (20) einerseits und einem Einlass des ersten Steuerventils (27) angeordnete zweite Kühlmittelpumpe (12) und
- gegebenenfalls eine zwischen dem Auslass des Heizungswärmetauschers (22) und einem Einlass der zweiten Heizvorrichtung (24) angeordnete dritte Kühlmittelpumpe (13).

9. Kraftfahrzeug gemäß einem der vorhergehenden Ansprüche, **gekennzeichnet durch** eine von der Hauptkühlkreisanordnung (8) und von der Zusatzkühlkreisanordnung (10) separierte Nebenkühlkreisanordnung (9), in der Kühlmittel in einem einen Ladeluftkühler (48) und/oder einen Abgasturbolader (47) der Brennkraftmaschine sowie einen Kühlmittelkühler (49) umfassenden Kühlkreis förderbar ist.

10. Kraftfahrzeug gemäß einem der vorhergehenden Ansprüche, **gekennzeichnet durch** ein Steuerventil (54) der Zusatzkühlkreisanordnung, wobei
- ein Einlass des Steuerventils (54) mit einem Auslass der Traktionsbatterie (4) verbunden ist und
- ein erster Auslass des Steuerventils (54) mit einem Einlass des Chillers (53) verbunden ist und
- ein zweiter Auslass des Steuerventils (54) mit einem Einlass des Ladegeräts (51) und/oder der Leistungselektronik (51) verbunden ist.

11. Kraftfahrzeug gemäß einem der vorhergehenden Ansprüche, **dadurch gekennzeichnet, dass** die Hauptkühlkreisanordnung (8) als Hochtemperaturkühlkreisanordnung und die Nebenkühlkreisanordnung (9) und/oder die Zusatzkühlkreisanordnung (10) als Niedertemperaturkühlkreisanordnung(en) ausgelegt ist/sind.

## Claims

1. Motor vehicle comprising
- an internal combustion prime mover that has an internal combustion engine (2),
- an electric traction motor (3),
- a traction battery (4), and
- a cooling system comprising a main cooling circuit assembly (8) in which the internal combustion engine (2), a coolant radiator (21), a heater core (22), a first heating device (23) by means of which heating power can be provided, an oil cooler (20) and a distribution system are integrated,
wherein
- in a first operating position of the distribution system, coolant can be conveyed in a first cooling circuit comprising
• the heater core (22) and
• the first heating device (23),
- in a second operating position of the distribution system, coolant can be conveyed in a second cooling circuit comprising
• the coolant radiator (21) and
• the oil cooler (20),
- in a third operating position of the distribution system, coolant can be conveyed
• in the first cooling circuit and
• in a third cooling circuit comprising the internal combustion engine (2) and excluding the coolant radiator (21), and
- in a fourth operating position of the distribution system, coolant can be conveyed in a fourth cooling circuit comprising
• the internal combustion engine (2) and
• the heater core (22),
**characterized by** an additional cooling circuit assembly (10) which is separate from the main cooling circuit assembly (8) and in which a charging device (51) for the traction battery (4) and/or power electronics (50) and the traction battery (4), a coolant radiator (52), a chiller (53) and a distribution system are integrated, wherein
- in a first operating position of the distribution system of the additional cooling circuit assembly (10), coolant can be conveyed
• in a first cooling circuit comprising the charging device (51) and/or the power electronics (50) and the coolant radiator (52), and
• in a second cooling circuit comprising the traction battery (4) and the chiller (53)
and
- in a second operating position of the distribution system of the additional cooling circuit assembly (10), coolant can be conveyed in a third cooling circuit comprising the charging device (51) and/or the power electronics (50) and the traction battery (4), the coolant radiator (52) and the chiller (35).

2. Motor vehicle according to claim 1, **characterized in that** the oil cooler (20) is connected to the electric traction motor (3) via an oil line (46).

3. Motor vehicle according to claim 1 or 2, **characterized in that** in a further operating position of the distribution system, coolant can be conveyed
• in the fourth cooling circuit and
• in a further cooling circuit comprising the internal combustion engine (2) and the coolant radiator (21).

4. Motor vehicle according to any of the preceding claims,
**characterized in that** a second heating device (24) is additionally integrated in the main cooling circuit assembly (8), with coolant being conveyed in an additional cooling circuit comprising the heater core (22) and the second heating device (24) in an additional operating position of the distribution system.

5. Motor vehicle according to any of the preceding claims,
**characterized in that** the distribution system comprises a distribution device (26), which
- has a first inlet (29) which is connected to an outlet (30, 31) of the heater core (22) and of the oil cooler (20), and
- has a first outlet (33) which is connected to an inlet (34) of the internal combustion engine (2), and
- has a second inlet (35) which is connected to an outlet (36, 37) of the internal combustion engine (22), and
- has a second outlet (38) which is connected to an inlet (39) of the coolant radiator (21), and
- has a third inlet (40) which is connected to an outlet (41) of the coolant radiator (21); and
- has a third outlet (42) which is connected to an inlet (43, 44) of the first heating device (23) and of the oil cooler (20).

6. Motor vehicle according to claim 5, **characterized in that** a fluidconducting connection between at least some of the inlets (29, 35, 40) and the outlets (33, 38, 42) of the distribution device 26 can be established and interrupted by means of a rotary valve (58, 59).

7. Motor vehicle according to claim 5 or 6, **characterized by**
- a first control valve (27) of the distribution system arranged between the outlet (31) of the heater core (22) and the first inlet (29) of the distribution device (26), and
- a second control valve (28) of the distribution system arranged between the third outlet (42) of the distribution device (26) and the inlet (44) of the oil cooler (20).

8. Motor vehicle according to claim 7, **characterized by**
- a first coolant pump (11), which is arranged between an outlet of the first control valve (27) and the inlet (34) of the internal combustion engine (2), and
- a second coolant pump (12), which is arranged between the outlet (31, 32) of the heater core (22) and the oil cooler (20) and an inlet of the first control valve (27), and
- optionally, a third coolant pump (13), which is arranged between the outlet of the heater core (22) and an inlet of the second heating device (24).

9. Motor vehicle according to any of the preceding claims, **characterized by** a secondary cooling circuit assembly (9) which is separate from the main cooling circuit assembly (8) and from the additional cooling circuit assembly (10) and in which coolant can be conveyed in a cooling circuit comprising a charge air cooler (48) and/or an exhaust gas turbocharger (47) of the internal combustion engine and a coolant radiator (49).

10. Motor vehicle according to any of the preceding claims, **characterized by** a control valve (54) of the additional cooling circuit assembly, wherein
- an inlet of the control valve (54) is connected to an outlet of the traction battery (4), and
- a first outlet of the control valve (54) is connected to an inlet of the chiller (53), and
- a second outlet of the control valve (54) is connected to an inlet of the charging device (51) and/or the power electronics (51).

11. Motor vehicle according to any of the preceding claims,
**characterized in that** the main cooling circuit assembly (8) is designed as a hightemperature cooling circuit assembly and the secondary cooling circuit assembly (9) and/or the additional cooling circuit assembly (10) is/are designed as a lowtemperature cooling circuit assembly.

## Revendications

1. Véhicule automobile, comportant
- un moteur à combustion interne qui présente un moteur thermique (2),
- un moteur de traction (3) électrique,
- une batterie de traction (4), et
- un système de refroidissement qui comprend un agencement de circuit de refroidissement principal (8) dans lequel sont intégrés le moteur thermique (2), un refroidisseur de liquide de refroidissement (21), un échangeur de chaleur de chauffage (22), un premier dispositif de chauffage (23) au moyen duquel une puissance de chauffage peut être mise à disposition, un refroidisseur d'huile (20) et un système de distribution,
dans lequel
- dans une première position de fonctionnement du système de distribution, du liquide de refroidissement peut être transporté dans un premier circuit de refroidissement comprenant
• l'échangeur de chaleur de chauffage (22) et
• le premier dispositif de chauffage (23),
- dans une deuxième position de fonctionnement du système de distribution, du liquide de refroidissement peut être transporté dans un deuxième circuit de refroidissement comprenant
• le refroidisseur de liquide de refroidissement (21) et
• le refroidisseur d'huile (20),
- dans une troisième position de fonctionnement du système de distribution, du liquide de refroidissement peut être transporté
• dans le premier circuit de refroidissement et
• dans un troisième circuit de refroidissement comprenant le moteur thermique (2) et excluant le refroidisseur de liquide de refroidissement (21),
et
- dans une quatrième position de fonctionnement du système de distribution, du liquide de refroidissement peut être transporté dans un quatrième circuit de refroidissement comprenant
• le moteur thermique (2) et
• l'échangeur de chaleur de chauffage (22),
**caractérisé par** un agencement de circuit de refroidissement supplémentaire (10) séparé de l'agencement de circuit de refroidissement principal (8), dans lequel agencement de circuit de refroidissement supplémentaire sont intégrés un chargeur (51) pour la batterie de traction (4) et/ou une électronique de puissance (50) ainsi que la batterie de traction (4), un refroidisseur de liquide de refroidissement (52), un chiller (53) et un système de distribution, dans lequel
- dans une première position de fonctionnement du système de distribution de l'agencement de circuit de refroidissement supplémentaire (10), du liquide de refroidissement
• peut être transporté dans un premier circuit de refroidissement comprenant le chargeur (51) et/ou l'électronique de puissance (50) ainsi que le refroidisseur de liquide de refroidissement (52) et
• peut être transporté dans un deuxième circuit de refroidissement comprenant la batterie de traction (4) et le chiller (53)
et
- dans une seconde position de fonctionnement du système de distribution de l'agencement de circuit de refroidissement supplémentaire (10), du liquide de refroidissement peut être transporté dans un troisième circuit de refroidissement comprenant le chargeur (51) et/ou l'électronique de puissance (50) ainsi que la batterie de traction (4), le refroidisseur de liquide de refroidissement (52) et le chiller (35).

2. Véhicule automobile selon la revendication 1, **caractérisé en ce que** le refroidisseur d'huile (20) est relié au moteur de traction (3) électrique par l'intermédiaire d'une conduite d'huile (46).

3. Véhicule automobile selon la revendication 1 ou 2, **caractérisé en ce que**, dans une autre position de fonctionnement du système de distribution, du liquide de refroidissement peut être transporté
• dans le quatrième circuit de refroidissement et
• dans un autre circuit de refroidissement comprenant le moteur thermique (2) et comprenant le refroidisseur de liquide de refroidissement (21).

4. Véhicule automobile selon l'une des revendications précédentes, **caractérisé en ce qu'**un second dispositif de chauffage (24) est en outre intégré dans l'agencement de circuit de refroidissement principal (8), dans lequel, dans une position de fonctionnement supplémentaire du système de distribution, du liquide de refroidissement peut être transporté dans un circuit de refroidissement supplémentaire comprenant l'échangeur de chaleur de chauffage (22) et le second dispositif de chauffage (24).

5. Véhicule automobile selon l'une des revendications précédentes, **caractérisé en ce que** le système de distribution comprend un dispositif de distribution (26) qui
- présente une première entrée (29) qui est reliée à respectivement une sortie (30, 31) de l'échangeur de chaleur de chauffage (22) et du refroidisseur d'huile (20), et
- présente une première sortie (33) qui est reliée à une entrée (34) du moteur thermique (2), et
- présente une deuxième entrée (35) qui est reliée à une sortie (36, 37) du moteur thermique (22), et
- présente une deuxième sortie (38) qui est reliée à une entrée (39) du refroidisseur de liquide de refroidissement (21), et
- présente une troisième entrée (40) qui est reliée à une sortie (41) du refroidisseur de liquide de refroidissement (21) ; et
- présente une troisième sortie (42) qui est reliée à respectivement une entrée (43, 44) du premier dispositif de chauffage (23) et du refroidisseur d'huile (20).

6. Véhicule automobile selon la revendication 5, **caractérisé en ce qu'**une liaison conductrice de fluide entre au moins certaines des entrées (29, 35, 40) et des sorties (33, 38, 42) du dispositif de distribution (26) peut être établie et interrompue au moyen d'une soupape rotative (58, 59).

7. Véhicule automobile selon la revendication 5 ou 6, **caractérisé par**
- une première vanne de commande (27) du système de distribution disposée entre la sortie (31) de l'échangeur de chaleur de chauffage (22) et la première entrée (29) du dispositif de distribution (26) et
- une seconde vanne de commande (28) du système de distribution disposée entre la troisième sortie (42) du dispositif de distribution (26) et
l'entrée (44) du refroidisseur d'huile (20).

8. Véhicule automobile selon la revendication 7, **caractérisé par**
- une première pompe de liquide de refroidissement (11) disposée entre une sortie de la première vanne de commande (27) et l'entrée (34) du moteur thermique (2) et
- une deuxième pompe de liquide de refroidissement (12) disposée respectivement entre la sortie (31, 32) de l'échangeur de chaleur de chauffage (22) et du refroidisseur d'huile (20) d'une part, et une entrée de la première vanne de commande (27) et
- éventuellement, une troisième pompe de liquide de refroidissement (13) disposée entre la sortie de l'échangeur de chaleur de chauffage (22) et une entrée du second dispositif de chauffage (24).

9. Véhicule automobile selon l'une des revendications précédentes, **caractérisé par** un agencement de circuit de refroidissement auxiliaire (9) séparé de l'agencement de circuit de refroidissement principal (8) et de l'agencement de circuit de refroidissement supplémentaire (10), dans lequel agencement de circuit de refroidissement auxiliaire du liquide de refroidissement peut être transporté dans un circuit de refroidissement comprenant un refroidisseur d'air de suralimentation (48) et/ou un turbocompresseur à gaz d'échappement (47) du moteur à combustion interne ainsi qu'un refroidisseur de liquide de refroidissement (49).

10. Véhicule automobile selon l'une des revendications précédentes, **caractérisé par** une vanne de commande (54) de l'agencement de circuit de refroidissement supplémentaire, dans lequel
- une entrée de la vanne de commande (54) est reliée à une sortie de la batterie de traction (4) et
- une première sortie de la vanne de commande (54) est reliée à une entrée du chiller (53) et
- une seconde sortie de la vanne de commande (54) est reliée à une entrée du chargeur (51) et/ou de l'électronique de puissance (51).

11. Véhicule automobile selon l'une des revendications précédentes, **caractérisé en ce que** l'agencement de circuit de refroidissement principal (8) est conçu en tant qu'agencement de circuit de refroidissement à haute température et l'agencement de circuit de refroidissement auxiliaire (9) et/ou l'agencement de circuit de refroidissement supplémentaire (10) sont conçus en tant qu'agencements de circuit de refroidissement à basse température.
